# EUROPEAN PATENT SPECIFICATION

(11) **EP 3 357 327 B1**
(45) Date of publication and mention of the grant of the patent: **26.08.2020**
(21) Application number: 18154789.4
(22) Date of filing: 01.02.2018
(51) Int. Cl.: A01F 15/08

(54) **BALE SHAPE AND DENSITY IMPROVEMENT**
BALLENFORM- UND -DICHTEVERBESSERUNG
AMÉLIORATION DE LA DENSITÉ ET DE LA FORME DE BALLES

(30) Priority: 02.02.2017 BE 201705064
(43) Date of publication of application: 08.08.2018
(73) Proprietor: CNH Industrial Belgium NV, 8210 Zedelgem (BE)
(72) Inventor: DEBBAUT, Thomas, 9932 RONSELE (BE); DEVROE, Jeroen, 8870 Izegem (BE); KINDT, Dieter, 8600 Vladslo (BE); LIEFOOGHE, Dries, 8690 Alveringem (BE); ROSSEEL, Bram, 8490 Snellegem (BE); VANDAELE, Thomas, 8210 Zedelgem (BE); VERHAEGHE, Didier, 8900 Ieper (BE)
(74) Representative: CNH Industrial IP Department

(56) References cited:
- EP-A1- 3 078 259
- EP-A1- 3 117 699
- US-A1- 2012 000 377
- US-A1- 2015 272 006
- US-A1- 2016 270 296

## Description

### BACKGROUND OF THE INVENTION

The present invention relates to an agricultural baler. Preferably the present invention relates to a square agricultural baler, which is provided for gathering crop material, forming slices of crop material from the gathered crop material, and pressing square bales from the slices.

Agricultural balers typically comprise two main parts used in the formation of the bales, being a pre-compression chamber and a baling chamber, as in EP 3 117 699 and EP 3 078 259. Crop material is gathered and pushed into the pre-compression chamber, where a slice of crop material is formed. Pre-compression chamber is linked to the baling chamber in such a manner that the slice of crop material can periodically be transferred into the baling chamber. In the baling chamber, a plunger reciprocally moves, thereby pressing a square bale from subsequently feeded slices.

The plunger movement is powered via a main shaft driven by a motor. Thereby, the motor can be a part of the baler, or can be a part of the puller (tractor) connected to the baler via a power take-off (PTO). In practice, this reciprocal movement of the plunger is often considered the most dominant movement in the baler, dominant meaning that other movements are made relative to this movement of the plunger. The reason is that the plunger movement requires the highest force (highest relative to other forces needed for operating the baler). Of all movements in the baler, the plunger movement shows the highest inertia.

The pre-compression chamber is adapted for receiving gathered crop material. To this end, the pre-compression chamber has an inlet. The pre-compression chamber furthermore includes an outlet towards the baling chamber. Between the inlet and the outlet, a channel is defined in which crop material can gather into a slice of crop material. The pre-compression chamber comprises a slice pushing mechanism, so-called stuffer, provided for pushing a slice of crop material formed in the pre-compression chamber through the outlet of the pre-compression chamber into the baling chamber. The sliced crop material is typically pushed in a first segment of the baling chamber. First segment is typically located directly behind the plunger (the plunger being in the withdrawn position). Thereby the slice of crop material is pushed in the baling chamber, after which the plunger can propel the crop material into the baling chamber, thereby pushing the most recently entered slice into the baling chamber, making it a part of the square bale which is being formed.

The pre-compression chamber comprises, for the purpose of pushing the slice into the baling chamber, a slice pushing mechanism. Different types of slice pushing mechanisms are known, among which fingers grasping behind the slice and pushing the slice through the outlet, or a set of conveyer belts in between which the slice is formed, and which conveyer belts are driven to push the slice through the outlet.

The slice pushing mechanism is driven via a driving mechanism that is operationally linked to the plunger driving mechanism. A synchronized movement between slice pushing mechanism and the plunger is needed to ensure a proper operation of the baler. Namely, only when the plunger is withdrawn, a slice can be pushed in the baling chamber. In practice, different synchronization types are possible among which a one/one synchronization, meaning that every withdrawal of the plunger a new slice is entered into the baling chamber, or a one/two synchronization, meaning that every other withdrawal of the plunger a new slice is entered, thus the plunger moves forth and back two times for each slice. Other synchronization timing such as one/three, one/four,... are also possible.

Synchronization is in practice often realized by mechanically linking the plunger driving mechanism and the slice pushing driving mechanism. Such mechanical link ensures proper synchronization, as the slice pushing mechanism is mechanically driven by the plunger movement, it cannot move out of synchronization. The synchronization can be variable using known techniques so that the timing can be adapted, while still having a connection between the plunger driving mechanism and the slice pushing driving mechanism.

A drawback in the operation of the known balers relates to so called top fill. Top fill is a measure for the uniformity of the slice after it has entered the first segment of the baling chamber. It will be recognized that a non uniform fill, for example where the lower part of the first segment is more dense than an upper part, results in an inferior bale. Such top fill has an effect that a bale is high dense at lower end, and not dense at the top, resulting in a unstable bale that is likely to show a substantial deviation from the ideal square form. A negative top fill also results in a substantial wear of the plunger and baling chamber, as forces are not equally transmitted. The plunger will feel a substantially high resistance at the lower part of the plunger compared to the upper part resistance of the plunger. This will create a torque force exerted to the plunger which has to be borne by the plunger driving mechanism. When the ideal top fill can be obtained, a bale can be formed with nearly ideal outer dimensions and shape, and excessive wear on the baler mechanism can be avoided. In prior art balers, the ideal top fill is obtained by controlling the slice forming process in the pre-compression chamber. By obtaining a slice in which the crop material is evenly spread over the slice, after which the slice is pushed into the baling chamber, an acceptable top fill can be obtained. Accurately obtaining such slice in which the crop material is evenly spread over the slice is cumbersome.

European patent application EP 3 117 699 A1 disclose a rectangular baler comprising a bale chamber delimited by a plurality of walls including a movable wall section, an actuator for exerting a pressure on the movable wall section, a plunger for compressing crop material in the bale chamber, and a density control system comprising: a position calculating module configured to calculate a new position for the movable wall section based on an input representative for bale density of compressed crop material in the bale chamber; and a position control module configured to control the actuator to position the movable wall section in the calculated position. European patent application EP 3 078 259 A1 discloses an agricultural baler having a pre-compression chamber to gather crop material, form a slice thereof and push the slice towards a baling chamber into a first segment thereof is disclosed. The baling chamber comprising a plunger for compressing slices of crop material into a bale, wherein a slice-presence-detecting sensor is provided in said first segment, an output of the sensor being operationally connected to a controller which is adapted to adjust a synchronization between the periodically forming and pushing of the slice in the pre-compression chamber and the reciprocal movement of the plunger.

It is an object of the present invention to provide a baler where top fill is controllable in a more accurate manner.

### SUMMARY OF THE INVENTION

To this end, the invention provides an agricultural baler comprising a baling chamber and a pre-compression chamber, wherein the pre-compression chamber is adapted to gather crop material and to periodically form a slice of said crop material and introduce the slice towards the baling chamber into a first segment of the baling chamber, the baling chamber comprising a plunger provided for reciprocally moving in the baling chamber thereby compressing slices of crop material into a bale, the baling chamber further at least comprising a movable top wall, characterized in that the first segment comprises at least one sensor, the at least one sensor being provided for outputting a first signal relating to a height of the slice in the first segment, and a second signal relating to a speed of introduction of the slice in the first segment, and wherein the movable top wall comprises a position sensor provided for outputting a third signal relating to a position of the movable top wall, wherein the baler further comprises a signal processor adapted to receive the first signal, second signal and third signal and configured to adjust baler operation parameters of the agricultural baler based on the received signals. The at least one sensor comprises a first sensor arranged in a central top section of said first segment of the baling chamber, and a second and a third sensor arranged in respectively a left top section and a right top section of said first segment of the baling chamber.

The invention is based on the insight that limited number of measurements in the baler can be used as a basis for controlling the majority of the baler operation. In particular, tests and simulations have shown that a combined measurements of the slice speed when the slice is introduced in the first segment of the baling chamber, and the slice height at which the slice arrives in the first segment of the baling chamber largely determines the mass and distribution of the material in the slice which will eventually form the bale. Knowledge about the mass and distribution of the material forming the bale can be used to adapt the baler operation parameters to influence or optimize the bale forming process. A further measurement that proved to be significant for determining baler operation parameters, relates to the position of the movable top wall. By feeding signals relating to these measurements to a signal processor, baler operation parameters can be adjusted to optimize the bale formation process in the baler.

Adjusting baler operation parameters based on a combination of a first signal relating to a height of the slice, a second signal relating to a speed of introduction of the slice and a third signal relating to a position of the movable top wall has a surprising effect. Particularly, the first and the second signal relate to characteristics that can be measured at an early stage in the bale formation process. Since the invention is based on the insight that these signals contain the information to adjust baler operation parameters, the baler operation can be optimized proactively instead of reactively. The first and second signal provide information on how the bale will be formed in the baling chamber, so that baler operation parameters can be adapted to form a optimal bale based on knowledge of the introduced slice, to which the first and second signal relate. This is in contrast with previous methods to adjust the baler operation parameters, which are typically based on measurements conducted on the bale, and wherein baler operation parameters are adjusted to influence the formation of the bale that will be formed after the bale on which the measurement is conducted. This is a reactive system, wherein the baler reacts to bale imperfections to improve the next bale. In the invention, the baler operation parameters are adjusted before the bale is created so that it is not necessary to measure an imperfection on a bale to improve the next bale. Based on the first and second signal, the baler operation parameters are adjusted in advance to optimize formation of the current bale (instead of optimizing formation of the next bale).

Preferably, the baler operation parameters comprise at least one of:
- Plunger-packer synchronization;
- Bale density;
- Baler capacity;
- Shape of the pre-compression chamber;
- PTO-rpm and/or torque;
- Trajectory followed by one or more tine bars in the pre-compression chamber;
- Rotor scraper angle; and
- Rotor or packer speed.

The above mentioned baler operation parameters influence the distribution of material in the slice, the density of the slice, the horizontal and vertical uniformity of the slice and the effect of introducing the slice into the baling chamber on the slice properties. In this manner, the slices as introduced in the baling chamber can be controlled so that indirectly the bale formation process is controlled.

Preferably, the at least one sensor comprises a first sensor arranged in a central top section of said first segment of the baling chamber. By providing a first sensor in a central top section of the first segment of the baling chamber, the first sensor is capable of observing the height of the slice in the first segment as well as the speed of introduction of the slice in the first segment. This allows a single sensor, the first sensor, to generate both the first signal and the second signal.

Preferably, the at least one sensor further comprises a second and a third sensor arranged in respectively a left top section and a right top section of said first segment of the baling chamber. By providing a second and a third sensor respectively on the left and on the right side of the first sensor, a difference can be measured between the left side, the middle side and the right side of the slice. Via the second and third sensor deviations in slice speed and/or slice height in the first section of the baling chamber are detectable so that the baler operation parameters can be adjusted to minimize further deviations.

Preferably, the at least one sensor further comprises multiple sensors arranged at side walls of said first segment of the baling chamber. Multiple sensors can be arranged in the side walls of the first segment to improve the speed measurement of introducing of the slice in the first segment. Particularly, when the sensor in the top section of the first segment cannot accurately generate the second signal, sensors provided in the side walls of the first segment of the baling chamber can improve the second signal and can improve the baler operation parameters adjustment.

Preferably, the processor is adapted to determine a time of flight of the slice in the bale chamber. The time of flight of the slice in the bale chamber is defined as the time period during which the slice is introduced from the pre-compression chamber to the slice being completely inside the bale chamber. The time of flight of the slice in the bale chamber can be deduced from the speed of introducing and the height of the slice in the first segment of the bale chamber. Based on the time of flight of the slice baler operation parameters can be adjusted.

Preferably, the baling chamber further comprises a left and a right movable side wall, and wherein each of the left and right movable side wall comprises a sidewall position sensor provided for outputting a further signal relating to a position of the corresponding sidewall, the processor is adapted to receive the further signals. The movable side walls influence the compression in the bale chamber, and therefore influence the density of the bale. The position of these side walls are preferably measured by side wall position sensors and are used by the processor to calculate or adapt baler operation parameters. In this context, it is noted that top doors and sidewalls are preferably mechanically linked to each other to that an input regarding a position of a sidewall is directly or indirectly related to the position of the top door. Furthermore, it is noted that different kinds of sensors could be connected to the signal processor to be used in calculating baler operation parameters.

Preferably, each sidewall position sensor comprises at least two position sensor elements arranged with a distance between each other. By providing at least two position sensor elements at each side wall, with a distance between each other, not only the position of the side wall can be measured but also deformation of the side wall is measurable. By taking the deformation of the side walls into account a more accurate adjustment can be done of the baler operation parameters.

Preferably, position sensor of the top wall comprises at least two position sensor elements arranged with a distance between each other. By providing two position sensor elements arranged with a distance between each other, deformation of the top wall can be taken into account by the processor.

### BRIEF DESCRIPTION OF THE DRAWINGS

Some embodiments of apparatus and/or methods in accordance with embodiments of the present invention are now described, by way of example only, and with reference to the accompanying drawings, in which:
figure 1 schematically illustrates the pre-compression chamber and the baling chamber;
figure 2 shows part of the baling chamber including the sensors; and
figure 3 shows a processor for calculating baler operation parameters.

### DETAILED DESCRIPTION OF THE DRAWINGS

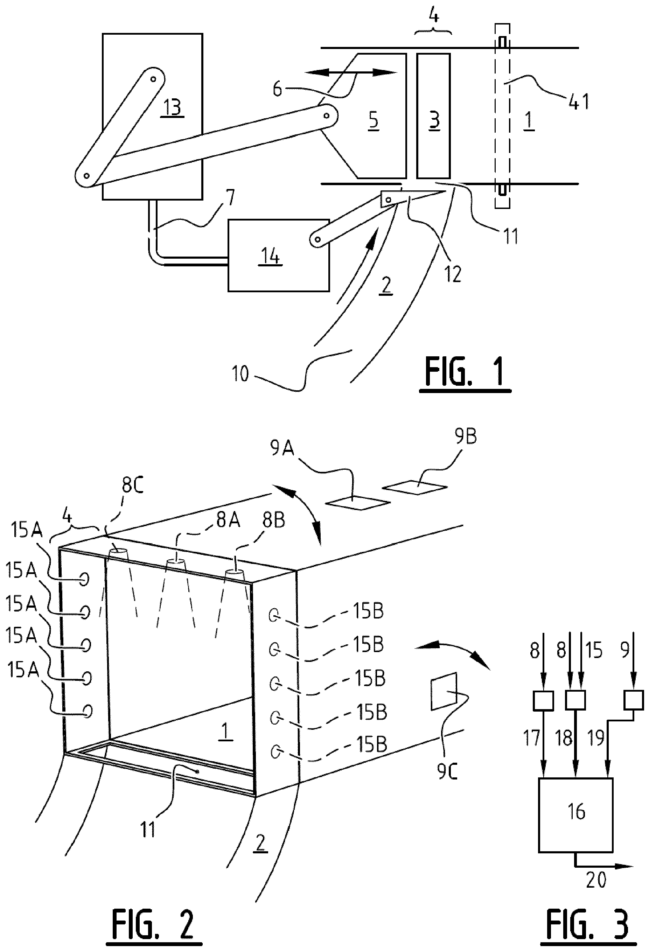

Figure 1 shows a schematic representation of main inside elements of an agricultural baler. The figure shows a baling chamber 1 and a pre-compression chamber 2. The pre-compression chamber opens in the baling chamber to push a slice of crop material 3 in a first segment 4 of the baling chamber 1.

The baling chamber comprises a plunger 5 which is provided for reciprocally moving in the baling chamber. The reciprocal movement is indicated by arrow 6. To this end, the plunger 5 is driven by a plunger driving mechanism 13. The connection between the plunger driving mechanism 13 and the plunger 5 is schematically represented by a pair of arms, however other driving mechanisms can be used as well for driving the plunger 5 in the reciprocal movement 6.

The pre-compression chamber 2 comprises a slice pushing mechanism 12 or so-called stuffer. The slice pushing mechanism 12 is driven by a slice pushing driving mechanism 14. Preferably, the slice pushing driving mechanism 14 is mechanically connected to the plunger driving mechanism 13. Such mechanical connection ensures a synchronized movement between the plunger 5 and the slice pushing mechanism 12. The mechanical connection is illustrated in figure 1 with connection 7. In a preferred embodiment, the mechanical connection allows a variable synchronization between the plunger and stuffer.

It will be clear that a synchronization between the slice pushing mechanism 12 of the pre-compression chamber, and the reciprocal movement 6 of the plunger 5 is important for a correct operation of the baler. In the reciprocal movement of the plunger 5, the plunger moves over at least a part of the first segment 4 of the baling chamber 1. Therefore, for being able to push a slice of crop material 3 into the baling chamber 1, the plunger 5 is preferably somewhere in a withdrawn position in the reciprocal movement. Otherwise the first segment 4 is not open for receiving a slice of crop material 3.

The pre-compression chamber preferably comprises an inlet 10 and an outlet 11. The outlet 11 opens toward the first segment 4 of the baling chamber 1, so that a slice of crop material 3 formed in the pre-compression chamber 2 can be pushed through the outlet 11 into the baling chamber 1. The outlet 11 of the pre-compression chamber can be integrally formed with an inlet of the baling chamber. The inlet 10 of the pre-compression chamber 2 is preferably connected to crop gathering means provided for gathering crop material from the field and pushing the gathered crop material into the pre-compression chamber 2 via the inlet 10.

Many operational settings influence the operation of the baler elements. These settings are steerable via relating parameters. The parameters are calculated by a processor that may be part of the baler or are manually set by an operator. The skilled person is familiar with these settings and therefore these settings are not described in much detail. These settings comprise, without limiting the scope of the settings, the baler capacity, shape of the pre-compression chamber, PTO-rpm, trajectory followed by one or more tine bars in the pre-compression chamber, rotor scraper angle and rotor or packer speed.

Figure 2 shows a preferred embodiment of a first segment 4 of the baling chamber 1, wherein multiple sensors are arranged. The top wall of the first segment 4 of the baling chamber 1 is preferably provided with a first sensor 8. In the preferred embodiment of figure 2, three sensors 8A, 8B and 8C are provided in the top wall, divided over the width of the baling chamber 1. It will be clear for the skilled person that different numbers of sensors 8 can be used and distributed over the width of the baling chamber 1 to obtain a more detailed measurement.

Tests have shown that when three sensors 8A, 8B and 8C are provided, one on the left-hand side of the baling chamber 1, another in the center of the baling chamber 1 and yet another at the right-hand side of the baling chamber 1, a reliable measurement can be obtained. The sensors 8 are preferably distance sensors able to measure a distance between the sensor and the slice in the first segment 4. Such sensor can measure the height of the slice in the baling chamber. The skilled person will understand that when the measurement frequency is high enough, also a speed of introduction of the slice in the first segment 4 of the baling chamber 1 can be deduced via the first sensors. By measuring a distance at predetermined time intervals, the difference in distance between successive measurements is related to the speed. By having multiple sensors over the width of the baling chamber, differences in slice height and/or slice speed, over the width of the baling chamber 1, can be detected. Alternatively, the sensors 8 are force or pressure sensors. Such sensors can measure the force of the slice in the baling chamber.

The baling chamber preferably comprises a movable top wall and movable side walls. The position of the top wall can be measured by a wall position sensor 9. Preferably, multiple position sensors 9A and 9B are provided, and arranged at a distance from each other, such that not only the position of the top wall can be measured but also the deformation of the top wall. A similar arrangement of sensors can be provided at the movable side walls. For simplicity, in figure 2, only one sensor 9C is shown at the side wall. It will be clear to the skilled person that multiple position sensors can be arranged at the side walls to measure both side wall position and side wall deformation. Preferably the position sensors are located at a frame element of the baling chamber, preferably at the density belt of the baling chamber. The sensors are mounted to the frame of the baling chamber and directed towards the movable walls, so that the position of the movable walls can be measured by measuring the distance between the sensor at the frame and the movable wall. Therefore the position sensors for the movable walls do not need to be connected to the walls itself, but may be connected to the frame.

In the embodiment of figure 2, a third type of sensors 15 are provided in a side wall of the first segment 4 of the baling chamber 1. Preferably, the third sensors comprise multiple presence sensors. The presence sensor can be formed by a distance sensor, contact sensor, force sensor, pressure sensor or by other types of sensors as will be recognized by the skilled person. By arranging the sensors 15 in a predetermined manner along the height of the baling chamber 1, the speed of introduction of a slice can be measured by the third sensors 15. In the embodiment of figure 2, a first set of third sensors is indicated with reference number 15A and is provided according to a first pattern in the right side wall of the baling chamber 1. A second set is indicated with reference number 15B and is arranged according to a second pattern in the left-side wall of the baling chamber. The skilled person will recognize that these third sensors 15 are optional and improve the speed measurement when a slice is introduced in the baling chamber. As explained above, the speed can also be measured by the first sensors 8. Tests have been conducted with ultrasonic sensors, which measure a distance to the object in front of the sensor. Based on these distance measurements, and based on the time between measurements, a speed of the object and optionally an acceleration thereof can be derived. This shows that when measurement data is logged, data from a single sensor can be used to measure both speed and distance. However it is preferred to use a sensor that directly outputs the speed for generating the second signal.

Figure 3 further illustrates a processor 16 adapted to output baler operation parameters 20. In order to calculate the baler operation parameters 20, the processor is configured to run predetermined algorithms and/or follow a set of predetermined rules based on a first signal 17 and/or second signal 18 and a third signal 19. The first signal 17 relates to the height of the slice 3 in the first segment 4 of the baling chamber 1, after the slice has been introduced. This signal is created by the sensors 8. The second signal relates to the speed of introduction of the slice in the baling chamber 1. As explained above this second signal can be generated directly or indirectly by the sensors 8 and/or by the sensors 15. The third signal relates to the position of the top wall and preferably relates to the position of the top wall and the side walls of the baling chamber. This third signal is generated by the second sensors 9.

Based on the figures and the description, the skilled person will be able to understand the operation and advantages of the invention as well as different embodiments thereof. It is however noted that the description and figures are merely intended for understanding the invention, and not for limiting the invention to certain embodiments or examples used therein. Therefore it is emphasized that the scope of the invention will only be defined in the claims.

## Claims

1. An agricultural baler comprising a baling chamber (1) and a pre-compression chamber (2), wherein the pre-compression chamber is adapted to gather crop material via a rotor and to periodically form a slice (3) of said crop material and introduce the slice towards the baling chamber into a first segment (4) of the baling chamber (1), the baling chamber comprising a plunger (5) provided for reciprocally moving (6) in the baling chamber thereby compressing slices of crop material into a bale, the baling chamber (1) further at least comprising a movable top wall, **characterized in that** the first segment comprises at least one sensor (8), the at least one sensor being provided for outputting a first signal (17) relating to a height of the slice in the first segment, and a second signal (18), and wherein the movable top wall comprises a position sensor (9) provided for outputting a third signal (19) relating to a position of the movable top wall, wherein the baler further comprises a signal processor (16) adapted to receive the first signal (17), second signal (18) and third signal (19) and configured to adjust baler operation parameters (20) of the agricultural baler based on the received signals; and
**in that** the second signal (18) relates to a speed of introduction of the slice (3) in the first segment (4), and **in that** the at least one sensor comprises a first sensor (8A) arranged in a central top section of said first segment of the baling chamber, and a second (8B) and a third (8C) sensor arranged in respectively a left top section and a right top section of said first segment of the baling chamber (1).

2. The agricultural baler of claim 1, wherein the baler operation parameters (20) comprise at least one of:
- Baler capacity;
- Shape of the pre-compression chamber;
- PTO-rpm;
- Trajectory followed by one or more tine bars in the pre-compression chamber;
- Rotor scraper angle; and
- Rotor speed.

3. The agricultural baler of claim 1, wherein the at least one sensor further comprises multiple sensors (15) arranged at side walls of said first segment (4) of the baling chamber.

4. The agricultural baler of any one of the previous claims, wherein the processor (16) is adapted to determine a time of flight of the slice in the bale chamber.

5. The agricultural baler of any one of the previous claims, wherein the baling chamber further comprises a left and a right movable side wall, and wherein each of the left and right movable side wall comprises a sidewall position sensor (9) provided for outputting a further signal relating to a position of the corresponding sidewall, the processor is adapted to receive the further signals.

6. The agricultural baler of claim 5, wherein each sidewall position sensor comprises at least two position sensor elements arranged with a distance between each other.

7. The agricultural baler of any one of the previous claims, wherein position sensor of the top wall comprises at least two position sensor elements (9A, 9B) arranged with a distance between each other.

## Patentansprüche

1. Landwirtschaftliche Ballenpresse, die eine Ballenpresskammer (1) und eine Vorverdichtungskammer (2) aufweist, wobei die Vorverdichtungskammer dazu eingerichtet ist, Erntematerial über einen Rotor zu sammeln, periodisch eine Scheibe (3) des Erntematerials zu bilden und die Scheibe in Richtung der Ballenpresskammer in ein erstes Segment (4) der Ballenpresskammer (1) einzuführen, wobei die Ballenpresskammer einen Kolben (5) aufweist, der zum Hin- und Herbewegen (6) in der Ballenpresskammer vorgesehen ist, wodurch Scheiben des Erntematerials zu einem Ballen gepresst werden, wobei die Ballenpresskammer (1) weiterhin mindestens eine bewegbare obere Wand aufweist, **dadurch gekennzeichnet, dass** das erste Segment mindestens einen Sensor (8) aufweist, wobei der mindestens eine Sensor dafür vorgesehen ist, ein erstes Signal (17), das sich auf eine Höhe der Scheibe in dem ersten Segment bezieht, und ein zweites Signal (18) auszugeben, und wobei die bewegbare obere Wand einen Positionssensor (9) aufweist, der dafür vorgesehen ist, ein drittes Signal (19) auszugeben, dass sich auf eine Position der bewegbaren oberen Wand bezieht, wobei die Ballenpresse weiterhin einen Signalprozessor (16) aufweist, der dazu eingerichtet, das erste Signal (17), zweite Signal (18) und dritte Signal (19) zu empfangen und dazu eingerichtet ist, Ballenpressenbetriebsparameter (20) der landwirtschaftlichen Ballenpresse auf Grundlage der empfangenen Signale einzustellen; und
dass sich das zweite Signal (18) auf eine Einführungsgeschwindigkeit der Scheibe (3) in dem ersten Segment (4) bezieht, und dass der mindestens eine Sensor einen ersten Sensor (8A), der in einem mittleren oberen Abschnitt des ersten Segments der Ballenpresskammer angeordnet ist, und einen zweiten (8B) und einen dritten (8C) Sensor aufweist, die in einem linken oberen Abschnitt bzw. in einem rechten oberen Abschnitt des ersten Segments der Ballenpresskammer (1) angeordnet sind.

2. Landwirtschaftliche Ballenpresse nach Anspruch 1, wobei die Ballenpressenbetriebsparameter (20) mindestens einen aus den folgenden umfassen:
- Ballenpressenkapazität;
- Gestalt der Vorverdichtungskammer;
- Zapfwellen-Drehzahl;
- Bewegungsbahn, der einer oder mehrere Zinkenstangen in der Vorverdichtungskammer folgen;
- Rotorabstreifwinkel; und
- Rotorgeschwindigkeit

3. Landwirtschaftliche Ballenpresse nach Anspruch 1, wobei der mindestens eine Sensor weiterhin mehrere Sensoren (15) aufweist, die an Seitenwänden des ersten Segments (4) der Ballenpresskammer angeordnet sind.

4. Landwirtschaftliche Ballenpresse nach einem der vorangehenden Ansprüche, wobei der Prozessor (16) dazu eingerichtet ist, eine Laufzeit der Scheibe in der Ballenpresskammer zu bestimmen.

5. Landwirtschaftliche Ballenpresse nach einem der vorangehenden Ansprüche, wobei die Ballenpresskammer weiterhin eine linke und eine rechte bewegbare Seitenwand aufweist, und wobei die linke und rechte bewegbare Seitenwand jeweils einen Seitenwandpositionssensor (9) aufweist, der dazu vorgesehen ist, ein weiteres Signal auszugeben, das sich auf eine Position der entsprechenden Seitenwand bezieht, wobei der Prozessor dazu eingerichtet ist, die weiteren Signale zu empfangen.

6. Landwirtschaftliche Ballenpresse nach Anspruch 5, wobei jeder Seitenwandpositionssensor mindestens zwei Positionssensorelemente aufweist, die beabstandet zueinander angeordnet sind.

7. Landwirtschaftliche Ballenpresse nach einem der vorangehenden Ansprüche, wobei der Positionssensor der oberen Wand mindestens zwei Positionssensorelemente (9A, 9B) aufweist, die beabstandet zueinander angeordnet sind.

## Revendications

1. Ramasseuse-presse comprenant une chambre de compression (1) et une chambre de pré-compression (2), dans laquelle la chambre de pré-compression est adaptée pour permettre de collecter de la matière récoltée via un rotor et former périodiquement une tranche (3) de ladite matière récoltée et pousser la tranche vers la chambre de compression jusque dans un premier segment (4) de la chambre de compression (1), la chambre de compression comprenant un piston (5) prévu pour se déplacer en un mouvement de va-et-vient (6) dans la chambre de compression, en comprimant ainsi des tranches de matière récoltée pour former une balle, la chambre de compression (1) comprenant en outre au moins une paroi supérieure mobile, **caractérisée en ce que** le premier segment comprend au moins un capteur (8), le au moins un capteur étant conçu pour émettre un premier signal (17) relatif à la hauteur de la tranche dans le premier segment, et un deuxième signal (18), où la paroi supérieure mobile comprend un capteur de position (9) conçu pour émettre un troisième signal (19) relatif à une position de la paroi supérieure mobile, où la ramasseuse-presse comprend en outre un processeur de signaux (16) adapté pour recevoir le premier signal (17), le deuxième signal (18) et le troisième signal (19) et configuré pour adapter les paramètres de fonctionnement (20) de la ramasseuse-presse en fonction des signaux reçus ; et
**en ce que** le deuxième signal (18) est relié à une vitesse d'introduction de la tranche (3) dans le premier segment (4), et **en ce que** le au moins un capteur comprend un premier capteur (8A) disposé dans une section supérieure centrale dudit premier segment de la chambre de compression, et un deuxième (8B) et un troisième (8C) capteur disposés respectivement dans une section supérieure gauche et une section supérieure droite dudit premier segment de la chambre de compression (1).

2. Ramasseuse-presse e selon la revendication 1, dans laquelle les paramètres de fonctionnement de la ramasseuse-presse (20) comprennent au moins un parmi :
- la capacité de la ramasseuse-presse ;
- la forme de la chambre de pré-compression ;
- le régime de la PDF ;
- la trajectoire suivie par une ou plusieurs barres à dents dans la chambre de pré-compression ;
- l'angle de raclage du rotor ; et
- la vitesse du rotor.

3. Ramasseuse-presse selon la revendication 1, dans laquelle au moins un capteur comprend en outre des capteurs multiples (15) disposés au niveau des parois latérales dudit premier segment (4) de la chambre de compression.

4. Ramasseuse-presse selon l'une quelconque des revendications précédentes, dans laquelle le processeur (16) est adapté pour déterminer le temps de vol de la tranche dans la chambre de compression.

5. Ramasseuse-presse selon l'une quelconque des revendications, dans laquelle la chambre de compression comprend un outre une paroi latérale mobile gauche et droite, et dans laquelle chaque paroi latérale mobile gauche et droite comprend un capteur de position de la paroi latérale (9) conçu pour émettre un signal supplémentaire relatif à une position de la paroi latérale correspondante, le processeur étant adapté pour recevoir les signaux supplémentaires.

6. Ramasseuse-presse selon la revendication 5, dans laquelle chaque capteur de position de la paroi latérale comprend au moins deux éléments de détection de position agencés avec un écart l'un par rapport à l'autre.

7. Ramasseuse-presse selon l'une quelconque des revendications précédentes, dans laquelle le capteur de position de la paroi supérieure comprend au moins deux éléments de détection de position (9A, 9B) agencés avec un écart l'un par rapport à l'autre.
